# EUROPÄISCHE PATENTSCHRIFT

(11) **EP 1 339 345 B1**
(45) Veröffentlichungstag und Bekanntmachung des Hinweises auf die Patenterteilung: **06.05.2009**
(21) Anmeldenummer: 01999327.8
(22) Anmeldetag: 03.12.2001
(51) Int. Cl.: A61C 13/00, B23Q 3/00

(54) **HALTEVORRICHTUNG FÜR EINEN KERAMIKROHLING**
HOLDING DEVICE FOR A CERAMIC BLANK
DISPOSITIF DE RETENUE POUR UNE EBAUCHE EN CERAMIQUE

(30) Priorität: 07.12.2000 CH 238800
(43) Veröffentlichungstag der Anmeldung: 03.09.2003
(73) Patentinhaber: Eidgenössische Technische Hochschule Zürich Nichtmetallische Werkstoffe, 8092 Zürich (CH)
(72) Erfinder: FILSER, Frank, CH-8102 Oberengstringen (CH); GAUCKLER, Ludwig, CH-8049 Zürich (CH); KOCHER, Peter, CH-4533 Riedholz SO (CH); LUETHY, Heinz, CH-2000 Neuchâtel (CH); SCHAERER, Peter, CH-8053 Zürich (CH); HOERHOLD, Heiner, 64654 Büdingen (DE); KREUDER, Peter, 61231 Bad Nauheim (DE); FECHER, Stefan, 63867 Johannesberg (DE)
(74) Vertreter: Breiter, Heinz
(86) Internationale Anmeldenummer: PCT/CH2001/000692
(87) Internationale Veröffentlichungsnummer: WO 2002/045614

(56) Entgegenhaltungen:
- EP-A- 0 455 854
- EP-A- 0 455 855
- EP-A- 0 807 422
- EP-A- 0 982 009
- WO-A-01/97707
- DE-A- 4 436 231

## Beschreibung

Die Erfindung bezieht sich auf eine Haltevorrichtung mit einem zylindrisch oder prismatisch geformten, porösen Keramikrohling und Mitteln zum Einspannen der Haltevorrichtung in einer Werkzeugmaschine zur materialabtragenden Bearbeitung des Rohlings für die Herstellung eines keramischen Werkstücks. Weiter betrifft die Erfindung ein Verfahren zur materialabtragenden Bearbeitung eines Rohlings in einer Haltevorrichtung und eine Verwendung einer Haltevorrichtung.

Bei der Herstellung eines keramischen Werkstücks wird die vergrösserte Gestalt aus dem noch porösen, vorgefertigten keramischen Rohling, welcher grün oder angesintert vorliegt, herausgearbeitet. Anschliessend wird das vergrösserte Werkstück dicht gesintert. Dabei schrumpft dieses auf die endgültige Gestalt, in welcher das dichte keramische Werkstück mit den Massen einer Modellvorlage oder einer Zeichnung übereinstimmt. Nach einer anderen Variante werden die keramischen Werkstücke aus dem porösen keramischen Rohling in Originalgrösse herausgearbeitet und dann die Porosität durch Infiltration geschlossen.

Poröse keramische Rohlinge sind einfach materialabtragend zu bearbeiten, da sie ihre endgültige Härte noch nicht erreicht haben. Daher sind sie in porösem Zustand aber auch sehr empfindlich auf alle mechanischen Belastungen, wie z.B. Zug, Druck, Biegung, Torsion, Schlag- und Stossbelastung. Bei der Bearbeitung haben Rohlinge jedoch genau solche Belastungen zu ertragen. Daher benötigen diese porösen keramischen Rohling speziell für ihre Bearbeitung ausgestattete Haltevorrichtungen, die während der Bearbeitung der Empfindlichkeit der Rohlinge besonders Rechnung tragen. Die mechanischen Belastungen während der Bearbeitung müssen minimiert und sicher in die Haltevorrichtung abgeleitet werden.

Diese Haltevorrichtungen werden ihrerseits auf der Rotationswelle einer geeigneten Werkzeugmaschine zur materialabtragenden Bearbeitung des Rohlings für die Herstellung des keramischen Werkstücks aufgespannt. Mit speziellen Bearbeitungswerkzeugen wird das keramische Werkstück aus dem Rohling herausgearbeitet. Dies erfolgt mit wenigstens je einem Fräs-, Bohr- oder Schleifwerkzeug, beispielsweise mit je einem Fräser für die Grob- und die Feinbearbeitung. Das Bearbeiten erfolgt in der Regel programmgesteuert, kann jedoch auch durch Kopierbearbeitung im Original- oder auch in vergrössertem Zustand mit Hilfe einer Modellvorlage erfolgen.

Für eine automatische Werkzeugmaschine zur Herstellung von Grundgerüsten für Zahnersatz, insbesondere für Zahnkronen und/oder Zahnbrücken von genauer dreidimensionaler Gestalt wird auf die PCT/CH 00/00623 bzw. die WO 01/39691 A1 verwiesen. Die Grundgerüste, wie in dieser Schrift die herausgearbeiteten keramischen Werkstücke genannt sind, werden mit einer Werkzeugmaschine hergestellt, die einen Maschinenrahmen oder ein - gehäuse, einen Werkstückträger mit einer Rotationswelle, wenigstens eine Digitalisierungseinheit, wenigstens eine Bearbeitungseinheit mit den Fräsern und eine elektronische Rechen- und Steuereinheit für alle Antriebsorgane umfasst. Es ist eine nicht weiter detaillierte Haltevorrichtung für den Rohling ausgebildet, welche auf der Rotationswelle einer Bewegungseinheit mit drei Translationsachsen in x-, y- und z-Richtung befestigt ist. Die Digitalisierung eines auf derselben Rotationswelle aufgespannten Präparationsmodells und die Bearbeitung des Rohlings werden zeitlich entkoppelt auf derselben Werkzeugmaschine durchgeführt. Vor der Bearbeitung des Rohlings werden aus den ermittelten und gespeicherten Digitalisierungsdaten und einem vorgegebenen, materialspezifischen Skalierungsfaktor die Bearbeitungswege für den Rohling berechnet.

Die DE 4436231 A1 beschreibt einen tablettenähnlichen Rohling für eine Zahnkrone, der in einen Ring eingebettet und über diesen in einer Spannvorrichtung zum Bearbeiten gehaltert ist. Mit dieser Vorrichtung soll erreicht werden, dass in der Dentaltechnik verwendete, sehr teure Materialien beim Herausarbeiten des keramischen Werkstücks aus dem Rohling in nur sehr kleiner Restmenge anfallen, indem der Durchmesser des Rohlings vermindert werden kann. Die Rohlinge von ausschliesslich tablettenähnlicher Form können wegen des Rings nicht mehr mit voller Gestaltungsfreiheit bearbeitet werden, wodurch schliesslich auch der minimale Materialverbrauch beeinträchtigt wird. Weiter ist diese Haltevorrichtung mit einem Ring für die Herstellung von Zahnkronen gedacht und nicht für die Herstellung von langen Zahnbrücken geeignet.

Die EP,A2 0982009 beschreibt ebenfalls eine Halterung für einen Rohling zur Herstellung eines Zahnersatzteils. Der Rohling überragt den Tragkörper in keiner Richtung, wodurch die frei zugängliche Oberfläche klein wird. Die Halterung soll den Rohling insbesondere während dem automatischen Transport in Magazinen und dgl. schützen, was offensichtlich zu Lasten der Bearbeitungsfreiheit geht.

Der vorliegenden Erfindung liegt die Aufgabe zugrunde, eine Haltevorrichtung der eingangs genannten Art zu schaffen, welche unabhängig von der Geometrie auch für langgestreckte Rohlinge einen hinreichenden Schutz gegen jegliche übermässigen mechanischen Belastungen und Verformungen bietet. Weiter soll ein möglichst grosser Anteil der Oberfläche des Rohlings für die materialabtragende Bearbeitung frei zugänglich sein und das herausgearbeitete keramische Werkstück sicher gehalten werden.

Bezüglich der Haltevorrichtung wird die Aufgabe erfindungsgemäss dadurch gelöst, dass über wenigstens einen Teil des Umfangs des spannungsfrei gehalterten Rohlings, im Bereich einer dessen Längsmittelachse umfassenden Ebene, im Haftverbund ein schmaler Rahmen befestigt ist, welche die Oberfläche des Rohlings nur zu einem kleinen Teil abdeckt, und welcher Rahmen seinerseits lösbar und verrutschsicher in einem stabilen Halter mit einem Spannadapter gehalten, und diese Kombination verdreh- und verrutschsicher in der Werkzeugmaschine befestigt ist. Spezielle und weiterbildende Ausführungsformen der Haltevorrichtung sind Gegenstand von abhängigen Patentansprüchen.

Ein in einer erfindungsgemässen Haltevorrichtung bearbeitbarer Rohling kann jede beliebige geometrische Form haben und in grünem oder angesintertem Zustand vorliegen. Senkrecht zur Längsmittelachse des Rohlings kann dieser rund oder vieleckig ausgebildet sein, im letzteren Fall mit je zwei parallelen Seitenflächen, insbesondere quadratisch, rechteckig, hexagonal oder oktogonal. Materialmässig bestehen die zylindrischen oder prismatischen Rohlinge vorzugsweise aus wenigstens einem Metalloxid, insbesondere aus Al₂O₃, TiO₂, MgO, Y₂O₃ und/oder Zirkonoxidmischkristall. Diesbezüglich wird auch auf die WO99/47065 verwiesen.

Erfindungsgemäss werden die porösen keramischen Rohlinge wenigstens teilweise von einem schmalen Rahmen umschlossen, der wiederum in einem stabilen Halter in einer Werkzeugmaschine gehalten wird. Der schmale Rahmen verläuft so, dass die Längsmittelachse des Rohlings im Bereich der Ebene des Rahmens liegt. Quantitativ liegt die Dicke des Rahmens, gemessen in tangentialer Richtung eines beispielsweise zylindrischen Rohlings, bei 1 bis 8 mm, vorzugsweise 3 bis 6 mm. Zweckmässig wird die Dicke des Rahmens so gewählt, dass höchstens 25%, insbesondere höchstens 15%, der Oberfläche des Rohlings abgedeckt sind.

In bezug auf die Längsmittelachse radial hat der Rahmen eine Breite, die ein problemloses Festklemmen im stabilen Halter ermöglicht, also vorzugsweise im Bereich von 3 bis 10 mm. Der Rahmen ist in den meisten Fällen umlaufend und regelmässig ausgebildet. Er kann jedoch auch auf einer Längs- oder Schmalseite des Rohlings viel breiter sein, beispielsweise 15 mm. Er kann dann ausschliesslich in diesem Bereich vom Halter gehalten sein.

Der Rahmen, ob umlaufend oder nur teilweise ausgebildet, ist auf vorzugsweise allen der Rohlingsoberfläche zugewandten Flächen durchgehend mit dem Rohling verbunden. Der Verbund wird derart herbeigeführt, dass der Rohling selbst keinerlei Belastungen erfährt. Die Innenflächen des Rahmens bilden eine Öffnung, die um den Klebespalt grösser ist als der einzufügende Rohling. In den dünnen Spalt zwischen dem Rahmen oder dessen Einzelteilen und dem Rohling ist ein Haftvermittler, vorzugsweise ein Zweikomponentenkleber, eingefüllt.

Der Rahmen oder dessen Bestandteile können auf der Innenseite aufgerauht oder mit einem Haftvermittler beschichtet sein.

Nach einer bevorzugten Variante ist der Rahmen gleichmässig, d.h. mit konstantem Querschnitt, entlang einer längsaxialen Umfanglinie ausgeführt und komplett entlang dieses ganzen Umfangs umlaufend ausgebildet. Ein einstückig ausgebildeter Rahmen kann jedoch auch U-förmig sein, mit den sich im wesentlichen über die ganze Dimension des Rohlings erstreckenden Schenkeln. Nach dieser Variante bleibt eine Längs- oder eine Schmalseite des Rohlings völlig frei. Bezüglich der Bearbeitungsfreiheit ist dies ein Vorteil. Nachteilig wirkt sich aus, dass an Orten ohne Rahmen keine Haltestege ausgebildet werden können.

Es liegt jedoch auch im Bereich der vorliegenden Erfindung, dass der Rahmen aus Einzelstücken zusammengesetzt ist, die jeweils auf den Rohling geklebt sind. Die Einzelstücke können aneinanderliegend oder in geringem Abstand voneinander aufgeklebt sein.

Der Rahmen besteht, wie immer er ausgeführt ist, zweckmässig aus einem mechanisch festen Kunststoff oder einem leicht bearbeitbaren Metall, beispielsweise aus Aluminium.

Ob der Rahmen in seinen Dimensionen durch beispielsweise ineinander steckbare Schenkel veränderbar ist, ob der Kleber in ausgesparte Nuten des Rohlings aufgetragen wird oder andere Varianten ausgeführt werden, liegt im Ermessen des Fachmanns und erfolgt insbesondere nach wirtschaftlichen Gesichtspunkten.

Der Rohling mit einem zweckmässig vom Fabrikanten aufgebrachten Rahmen wird nach an sich bekannten Verfahren lösbar in einem mechanisch stabilen Halter geklemmt, welcher einen Spannadapter für die Werkzeugmaschine aufweist, insbesondere einen Dorn mit Verdrehsicherung zum Einstecken oder einen Teller zum Anflanschen. Wesentlich ist dabei, dass das Einklemmen des Rahmens so erfolgt, dass der Rohling selbst keine Belastungen erfährt. Mit andern Worten sind die Haltekräfte des Rohlingsrahmens im Halter nicht in Richtung der Rohlingsoberfläche gerichtet. Dies kann beispielsweise mit einem geschlossenen oder U-förmigen Klemmrahmen, aber bei entsprechender Ausbildung des Rahmens auch mit zwei Klemmbacken erfolgen.

Das Festklemmen des Rahmens im Halter kann auch durch eine spezielle Ausführung der Aussenseite des Rahmens oder Teilen davon erleichtert werden, indem geeignete Flächen zur Aufnahme ausgebildet sind, z. B. in Form von Kegeln, Pyramiden, Halbkugeln, aber auch in Schwalbenschwanz- oder Dachform, welche zusätzlich der Lagebestimmung dienen.

In bezug auf das Verfahren wird die Aufgabe erfindungsgemäss dadurch gelöst, dass ein vorgegebenes Werkstück kontinuierlich ohne Vorgabe der Vorschubrichtung aus dem keramischen Rohling freigelegt wird, bis nur noch nach Ort und Anzahl frei wählbare Haltestege ausgebildet sind, die auf dem Restmaterial des Rohlings im Bereich des Rahmens oder auf dem Rahmen direkt enden.

Während der Bearbeitung wird die Verbindung zwischen dem Werkstück und dem Restmaterial immer schwächer, bis bei Bearbeitungsabschluss das Werkstück nur noch über die Haltestege mit dem Restmaterial bzw. Rahmen verbunden ist. Die Bearbeitung wird nicht wie bei einer einseitigen Halterung durch Vorgabe der Vorschubrichtung und/oder der Bearbeitung eingeschränkt. Das Werkstück kann bis zum Abschluss der Bearbeitung sicher gehalten werden, es besteht keine Gefahr eines unkontrollierten Herausbrechens des Werkstücks.

Durch die im Verhältnis zum Durchmesser des Rohlings geringe Dicke des Rahmens ist die angestrebte maximale freie Zugänglichkeit der Rohlingsoberfläche gewahrt. Eine Einschränkung der Art der möglichen Rohlingsquerschnitte wird nicht vorgenommen, es können geeignete Rohlingsquerschnitte gewählt werden. Die Rohlingslänge kann auch für Werkstücke mit grösseren Spannlängen, beispielsweise mehrgliedrige Zahnbrücken, angepasst werden. Der Rohlingsdurchmesser kann ebenfalls auf grössere und kleinere Werkstücke geeignet angepasst werden. Besonders anspruchsvoll sind stark gekrümmte grosse Zahnbrücken, bei welchen sich die erfindungsgemässe Haltevorrichtung in Tests bereits bewährt hat.

Die erfindungsgemässe Haltevorrichtung kann insbesondere zur Herstellung von vollkeramischem Zahnersatz, insbesondere von Zahnkronen oder Zahnbrücken, vorteilhaft eingesetzt werden.

Die Vorteile der Erfindung können wie folgt kurz zusammengefasst werden. Der umlaufende Rahmen bedeckt nur zu einem kleinen Teil die Oberfläche des Rohlings, bietet also eine maximale für die Bearbeitung frei zugängliche Oberfläche. Der wenigstens teilweise umlaufende Rahmen bietet auch die Möglichkeit, im Bereich des Rahmens Haltestege nach Anzahl und Ort überall frei zu bestimmen. Eine an die individuelle Werkstückform, z.B. Zahnform, angepasste Haltestegekonfiguration wird ermöglicht. Damit wird die Einleitung der Bearbeitungskräfte in die Halterung optimiert. Zusätzlich sind die Belastungen in Folge der Bearbeitung flächendeckend verteilt und nicht nur auf einem kleinen Teil konzentriert.

Die Erfindung wird anhand von in der Zeichnung dargestellten Ausführungsbeispielen, welche auch Gegenstand von abhängigen Patentansprüchen sind, näher erläutert. Es zeigen schematisch:
- Fig. 1 einen Keramikrohling mit Rahmen in perspektivischer Darstellung,
- Fig. 2 eine Variante gemäss Fig. 1,
- Fig. 3 eine weitere Variante gemäss Fig. 1 im Axialschnitt,
- Fig. 4 ein Detail im Bereich des Rahmens im Radialschnitt,
- Fig. 5 einen quaderförmigen Rohling in perspektivischer Ansicht,
- Fig. 6 eine Variante gemäss Fig. 5,
- Fig. 7 eine Draufsicht auf ein herausgearbeitetes Werkstück,
- Fig. 8 eine Seitenansicht gemäss Fig. 7,
- Fig. 9 ein Detail IX gemäss Fig. 7,
- Fig. 10 eine Variante eines Werkstücks gemäss Fig. 7,
- Fig. 11 eine Seitenansicht gemäss Fig. 10,
- Fig. 12 eine teilweise aufgeschnittene Seitenansicht eines Halters,
- Fig. 13 einen Halterunterteil gemäss Fig. 12,
- Fig. 14 eine Draufsicht auf einen in einen Halter gespannten Rohling,
- Fig. 15 eine Radialschnitt XV - XV gemäss Fig. 14, und
- Fig. 16 ein Schema für die Übertragung der Klemmkraft.

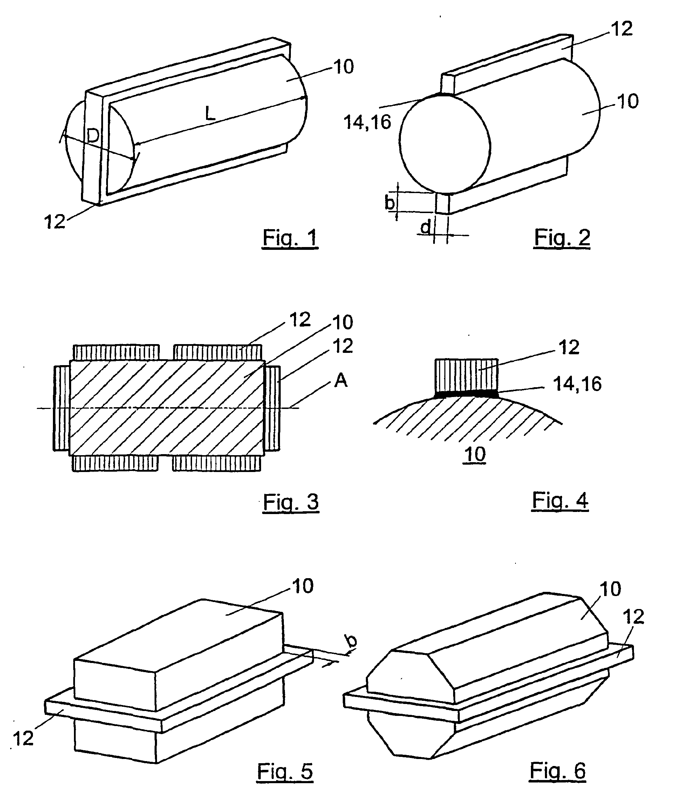

In Fig. 1 ist ein poröser Keramikrohling 10 von zylindrischer Form dargestellt. Im vorliegenden Fall besteht er aus Zirkonoxid, hat einen Durchmesser D von 25 mm und eine Länge L von 48 mm. Im Bereich der Längsmittelachse A (Fig. 3) ist ein geschlossener, im Querschnitt rechteckiger Rahmen 12 aufgeklebt, welcher im vorliegenden Fall aus "Makrolon"-Hartkunststoff besteht. Der Rahmen hat Aussenmasse von 56 x 32 x 5 mm, die entsprechenden Innenmasse sind 48,5 x 25,5 x 5 mm. Daraus resultiert ein mittlerer Klebspalt 14 (Fig. 4) von 0,25 mm, welcher mit einem Schnellklebstoff 16 gefüllt ist, beispielsweise dem Zweikomponentenklebstoff Araldit der Firma Ciba, Basel. Bei einer Rahmendicke d von 6 mm ergibt sich ein Abdeckungsgrad der Rohlingsoberfläche von 21 %, bei einer Dicke d von 3 mm ein Abdeckungsgrad von 10%. Bei anderen Rohlingsdimensionen und -formen sind die Masse des Rahmens entsprechend angepasst, wobei der Klebspalt jedoch in etwa gleich bleibt.

Eine Variante gemäss Fig. 2 unterscheidet sich von Fig. 1 dahingehend, dass der Rahmen 12 einer Dicke d und einer Breite b nicht geschlossen, sondern U-förmig ausgebildet ist. Die beiden Schenkel des Rahmens sind in der Regel etwa bündig mit der im Querschnitt kreisförmigen, freien Stirnfläche des Rohlings 10, sie können jedoch auch kürzer oder länger ausgebildet sein.

Die Variante gemäss Fig. 3 hat einen entsprechenden Rahmen 12, welcher jedoch stückweise auf den Rohling 10 aufgeklebt ist.

Fig. 4 verdeutlicht das Verkleben des Rahmens 12 mit dem Rohling 10, wobei der Klebstoffspalt 14 mit einem Kleber 16 gefüllt ist.

In der Ausführungsform gemäss Fig. 5 ist der Rohling 10 quaderförmig ausgebildet, der Rahmen 12 ist auf der hinteren Stirnseite auf eine Breite b verbreitert ausgebildet, damit beim Haltern Klemmbacken angreifen können.

Ein Rohling 10 gemäss Fig. 6 ist im Querschnitt achteckig ausgebildet, es liegen wie in Fig. 5 jeweils zwei parallel verlaufende Ebenen gegenüber, auf welche der umlaufende Rahmen 12 geklebt ist.

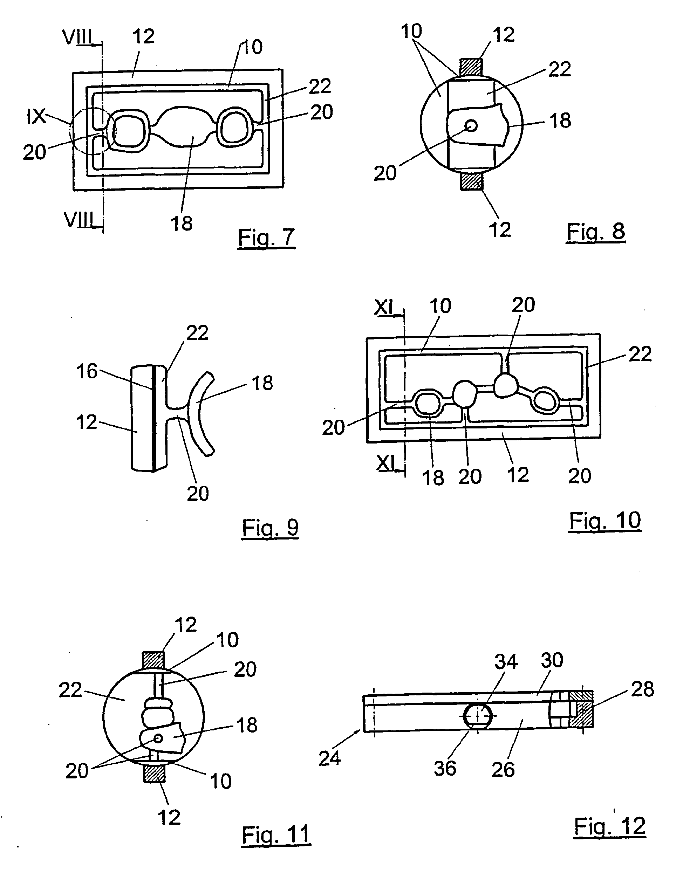

In Fig. 7 und 8 ist ein aus einem Rohling 10, von welchem lediglich noch einige Reste zu erkennen sind, herausgearbeitetes Werkstück 18, im vorliegenden Fall ein dreigliedriges Grundgerüst einer Zahnbrücke, dargestellt. Über zwei stirnseitige Haltestege 20 wird das Werkstück 18 gehaltert und ist mit dem verbleibenden Restrohling 10, 22 im Bereich des Rahmens 12 verbunden. Zwei stirnseitige Restscheiben 22 des Rohlings 10 können als Restmaterial verbleiben, wenn der Rohling in bezug auf seine Längsachse nicht vollständig bearbeitet wird. Verbleibendes Material am Rahmen 12 schützt die Bearbeitungswerkzeuge vor Berührung mit dem Rahmen. Zusätzlicher Schutz des Bearbeitungswerkzeugs vor Bruch bei Berührung mit dem Rahmen entsteht, wenn dieser aus Kunststoff und nicht aus Metall besteht.

Der Bereich IX gemäss Fig. 7 ist in Fig. 9 vergrössert dargestellt, eine alternative direkte Verbindung des Haltestegs 20 mit dem Rahmen 12 ohne eine Restscheibe 22 ist gestrichelt angedeutet. Am Schluss der Bearbeitung des Rohlings werden die Stege 20 vom Werkstück 18 abgetrennt und die Trennstelle des Werkstücks glatt geschliffen.

Das Werkstück 18, eine viergliedrige Zahnbrücke in kavitaler Draufsicht gemäss Fig. 10 und in Schnittdarstellung gemäss Fig. 11 (Schnitt XI-XI in Fig. 10), ist jedoch wesentlich komplizierter ausgebildet und hat insgesamt vier Haltestege 20, wovon zwei mit der Stirnseite 22 und zwei mit Mantelresten des Rohlings 10 verbunden sind, jeweils im Bereich des Rahmens 12.

Es ist von erfindungswesentlicher Bedeutung, dass die Kräfte, die auf das Werkstück 18 wirken, über die Haltestege 20 gemäss Fig. 7 bis 11 jeweils über den Haftvermittler 16 in den Rahmen 12 abgeleitet werden. So wird der Restrohling bzw. das Werkstück 18 sicher innerhalb des Rahmens 12 gehalten. Dies kann durch eine direkte oder indirekte Verbindung der Haltestege 20 mit dem Rahmen 12 erfolgen, beispielsweise auch über eine Restscheibe 22. In dieser Hinsicht bietet ein geschlossener Rahmen bezüglich der Stabilität und Verbindungsmöglichkeiten zu Haltestegen 20 die bevorzugte Lösung.

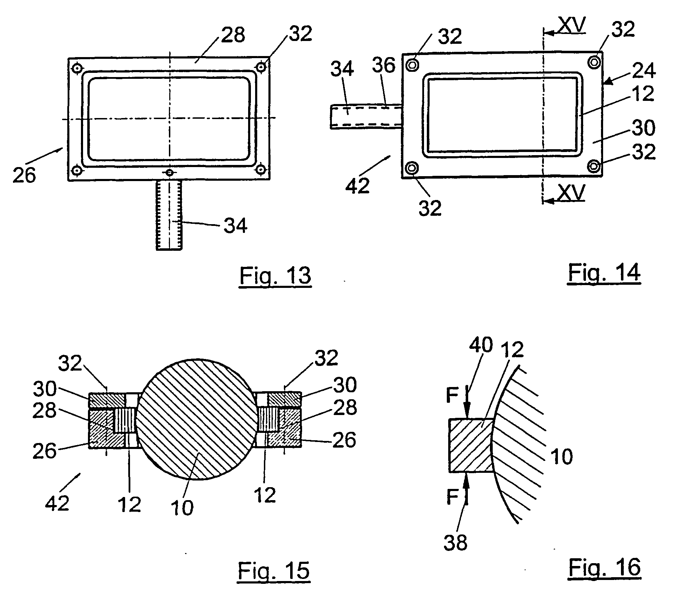

Ein in Fig. 12 und 13 dargestellter Halter 24 für den Rahmen 12 von Rohlingen 10 ist im wesentlichen zweiteilig ausgebildet, wobei Fig. 13 den Halterunterteil 26 zeigt, welcher einen umlaufenden Absatz 28 hat. In die becherförmige Aussparung, gebildet aus dem umlaufenden Absatz 28 im Halterunterteil 26, wird der Rahmen 12 des Rohlings 10 eingelegt. Das Halteroberteil 30, ein dimensionsgleicher flacher Deckel, wird bei eingelegtem Rahmen 12 auf das Halterunterteil 26 gepresst. Dabei wird, und dies ist von wesentlicher Bedeutung, lediglich der Rahmen 12 durch Aufbringen einer Klemmkraft gespannt. Auf den Rohling 10 werden keine Spannkräfte übertragen. Das Spannen erfolgt im vorliegenden Fall durch in den vier Ecken angebrachte Schrauben, die entsprechenden Schraubenlöcher 32 sind eingezeichnet. Am Halterunterteil 26 ist ein Spannadapter 34 befestigt, welcher z.B. über einen Dorn im Futter der Rotationswelle einer Werkzeugmaschine gehaltert wird. Es ist noch eine Verdrehsicherung 36 vorgesehen, welche in Form einer Abflachung oder eines Bolzens ausgeführt ist.

Eine Haltevorrichtung 42 gemäss Fig. 14 und 15 besteht aus dem Halter 24, welcher aus dem Halterunterteil 26, dem Halteroberteil 30, dem Spannadapter 34 und Schrauben 32 besteht, mit der eingelegten Kombination aus Rohling 10 und Rahmen 12. Der Halter 24 ist stabil und kann aus Aluminium, seinen Legierungen oder auch aus Stahl gefertigt sein. Die Verbindung zwischen Halter 24 und Rahmen 12 ist lösbar, so dass der Rahmen 12 mitsamt dem Rohling 10 einfach eingelegt und auch wieder entnommen werden kann. Der Halter 24 berührt dabei den keramischen Rohling 10 nicht. Der Rahmen 12 wird in den Halterunterteil 26 eingelegt, welcher eine passende, becherförmige Aussparung dafür hat. Das Halteroberteil 30 wird auf das Halterunterteil 26 aufgesetzt und daran befestigt, wie bereits gezeigt ebenfalls mit Schrauben. Dabei wird der Rahmen 12 zwischen dem Halterunterteil und dem Halteroberteil eingeklemmt. Die gestrichelte Linie am Spannadapter 34 ist eine Verdrehsicherung 36. Der Spannadapter 34 kann auf der Längs- oder Schmalseite angeordnet sein.

In Fig. 16 werden die Klemmkräfte F durch Pfeile 38, 40 dargestellt, sie wirken in bezug auf den Rohling in tangentialer Richtung. Mit andern Worten ist die Wirkrichtung der Klemmkräfte F nicht auf den Rohling 10 gerichtet. Der Halter 24 wird mitsamt der Kombination aus Rahmen 12 und Rohling 10 mittels eines maschinenseitigen Spannadapters 34 in eine vordefinierte Position in einer Bearbeitungsmaschine gebracht, damit der Rohling dort spanend bearbeitet werden kann. Die vordefinierte Position wird mit einer Verdrehsicherung 36 (Fig. 12, 13) fixiert.

Nach nicht gezeichneten Varianten erstreckt sich der Halter 24 lediglich über einen Teil des Rahmens 12, beispielsweise U-förmig. Bei einem stirnseitig verbreiterten Rahmen 12 können auch lediglich zwei Klemmbacken ausgebildet sein.

## Patentansprüche

1. Haltevorrichtung (42) mit einem zylindrisch oder prismatisch geformten, porösen Keramikrohling (10) und Mitteln zum Einspannen der Haltevorrichtung in einer Werkzeugmaschine zur materialabtragenden Bearbeitung des Rohlings (10) für die Herstellung eines keramischen Werkstücks (18),
**dadurch gekennzeichnet, dass**
über wenigstens einen Teil des Umfangs des spannungsfrei gehalterten Rohlings (10), im Bereich einer dessen Längsmittelachse (A) umfassenden Ebene, im Haftverbund ein schmaler Rahmen (12) befestigt ist, welcher die Oberfläche des Rohlings (10) nur zu einem kleinen Teil abdeckt, und welcher Rahmen (12) seinerseits lösbar und verrutschsicher in einem stabilen Halter (24) mit einem Spannadapter (34) gehalten, und diese Kombination verdreh- und verrutschsicher in der Werkzeugmaschine befestigbar ist.

2. Haltevorrichtung (42) nach Anspruch 1, **dadurch gekennzeichnet, dass** der Rohling (10) senkrecht zur Längsmittelachse (A) rund oder vieleckig, mit zwei parallelen Seitenflächen, insbesondere quadratisch, rechteckig, hexagonal oder oktogonal, ausgebildet ist.

3. Haltevorrichtung (42) nach Anspruch 1 oder 2, **dadurch gekennzeichnet, dass** der grüne oder angesinterte Keramikrohling (10) aus einem oder mehreren Metalloxiden, vorzugsweise aus Al₂0₃, TiO₂, MgO, Y₂0₃ und/oder Zirkonoxidmischkristall, besteht.

4. Haltevorrichtung (42) nach einem der Ansprüche 1 bis 3, **dadurch gekennzeichnet, dass** der Rahmen (12) die Oberfläche des zu bearbeitenden Rohlings (10) höchstens zu 25%, vorzugsweise höchstens zu 15%, abdeckt, und/oder eine Dicke (d) vorzugsweise 1 bis 8 mm, insbesondere 3 bis 6 mm, hat.

5. Haltevorrichtung (42) nach einem der Ansprüche 1 bis 4, **dadurch gekennzeichnet, dass** der Rahmen (12) eine Breite (b) von 3 bis 10 mm, auf einer Längs- oder Schmalseite auch bis 20 mm hat, sonst jedoch regelmässig ausgebildet ist.

6. Haltevorrichtung (42) nach einem der Ansprüche 1 bis 5, **dadurch gekennzeichnet, dass** der Rahmen (12) geschlossen oder U-förmig mit sich im wesentlichen über die ganze Länge des Rohlings (10) erstreckenden Schenkeln ausgebildet ist.

7. Haltevorrichtung (42) nach einem der Ansprüche 1 bis 5, **dadurch gekennzeichnet, dass** der Rahmen (12) aus miteinander verbundenen, aneinanderliegenden oder in vorzugsweise geringem Abstand voneinander mit dem Rohling (10) verklebten Teilstücken besteht.

8. Haltevorrichtung (42) nach einem der Ansprüche 1 bis 7, **dadurch gekennzeichnet, dass** der dünne Spalt (14) zwischen dem Rahmen (12) oder dessen Einzelteilen und dem Rohling (10) mit einem Haftvermittler (16), vorzugsweise mit einem Kleber, gefüllt ist.

9. Haltevorrichtung (42) nach einem der Ansprüche 1 bis 8, **dadurch gekennzeichnet, dass** auf dem freiliegenden Teil des Rahmens (12) geeignete Flächen zur Aufnahme im Halter (24) ausgebildet sind, insbesondere Kegel, Pyramiden, Halbkugeln, Schwalbenschwanz- und/oder Dachformen.

10. Haltevorrichtung (42) nach einem der Ansprüche 1 bis 9, **dadurch gekennzeichnet, dass** auf dem freiliegenden Teil des Rahmens (12) und/oder auf dem porösen Rohling (10) optisch bzw. maschinenlesbare Informationen aufgebracht sind, insbesondere der Schrumpfungsfaktor und/oder die Gründichte.

11. Haltevorrichtung (42) nach einem der Ansprüche 1 bis 10, **dadurch gekennzeichnet, dass** der Rahmen (12) in einem mechanisch stabilen Halter (24) mit nicht auf den Rohling (10) einwirkender Klemmkraft gehaltert ist, und der Halter (24) einen Spannadapter (34) für die Werkzeugmaschine aufweist, insbesondere einen Dorn mit Verdrehsicherung (36) zum Einstecken oder einen Teller zum Aufflanschen.

12. Haltevorrichtung (42) nach Anspruch 11, **dadurch gekennzeichnet, dass** der Halter (24) einen geschlossenen Rahmen mit einem Halterunterteil (26) und einem Halteroberteil (30) oder zwei Klemmbacken zur Aufnahme des Rahmens oder Teilen davon aufweist.

13. Verfahren zur materialabtragenden Bearbeitung eines Rohlings (10) in einer Haltevorrichtung (42) nach einem der Ansprüche 1 bis 12,
**dadurch gekennzeichnet, dass**
ein vorgegebenes Werkstück (18) ohne Vorgabe der Vorschubrichtung kontinuierlich aus dem keramischen Rohling (10) freigelegt wird, bis nur noch nach Anzahl und Ort frei wählbare Haltestege (20) ausgebildet sind, die auf dem Restmaterial des Rohlings im Bereich des Rahmens (12) oder auf dem Rahmen (12) direkt enden.

14. Verwendung einer Haltevorrichtung (42) nach einem der Ansprüche 1 bis 12 zur Herstellung von vollkeramischen Zahnersatz, insbesondere Zahnkronen oder Zahnbrücken.

## Claims

1. Holding device (42) with a cylindrically or prismatically shaped porous ceramic blank (10) and with means for chucking the holding device in a machine tool for the material-removing machining of the blank (10) for the production of a ceramic workpiece (18), **characterized in that** a narrow frame (12) is fastened with an adhesive bond over at least part of the circumference of the tensionlessly held blank (10), in the region of a plane comprising a longitudinal mid-axis (A) of the latter, which frame (12) covers only a small part of the surface of the blank (10), and which frame (12) is itself held releasably and in a non-slip manner in a stable holder (24) by means of a tension adapter (34), and this combination can be fastened in the machine tool in a non-twistable and non-slip manner.

2. Holding device (42) according to Claim 1, **characterized in that** the blank (10) is formed perpendicularly to the longitudinal mid-axis (A) so as to be round or polygonal, with two parallel side faces, in particular square, rectangular, hexagonal or octagonal.

3. Holding device (42) according to Claim 1 or 2, **characterized in that** the green or sintered ceramic blank (10) consists of one or more metal oxides, preferably of Al₂O₃, TiO₂, MgO, Y₂O₃ and/or zirconium oxide mixed crystal.

4. Holding device (42) according to one of Claims 1 to 3, **characterized in that** the frame (12) covers at most 25%, preferably at most 15%, of the surface of the blank (10) to be machined and/or has a thickness (d) of preferably 1 to 8 mm, in particular of 3 to 6 mm.

5. Holding device (42) according to one of Claims 1 to 4, **characterized in that** the frame (12) has a width (b) of 3 to 10 mm, also up to 20 mm on one longitudinal or narrow side, but is otherwise of regular design.

6. Holding device (42) according to one of Claims 1 to 5, **characterized in that** the frame (12) is of closed design or of U-shaped design with legs extending essentially over the entire length of the blank (10).

7. Holding device (42) according to one of Claims 1 to 5, **characterized in that** the frame (12) consists of portions which are connected to one another, bear one against the other or are glued to the blank (10) preferably at a short distance from one another.

8. Holding device (42) according to one of Claims 1 to 7, **characterized in that** the thin gap (14) between the frame (12) or its individual parts and the blank (10) is filled with an adhesion promoter (16), preferably with an adhesive.

9. Holding device (42) according to one of Claims 1 to 8, **characterized in that** suitable faces for reception in the holder (24), in particular cones, pyramids, hemispheres, dovetail and/or roof shapes, are formed on the exposed part of the frame (12).

10. Holding device (42) according to one of Claims 1 to 9, **characterized in that** optically readable or machine-readable information, in particular the shrinkage factor and/or the green density, is applied to the exposed part of the frame (12) and/or to the porous blank (10).

11. Holding device (42) according to one of Claims 1 to 10, **characterized in that** the frame (12) is held in a mechanically stable holder (24) by means of clamping force not acting on the blank (10), and the holder (24) has for the machine tool a tension adapter (34), in particular a mandrel, with an anti-twist facility (36) for insertion, or a plate for flanging on.

12. Holding device (42) according to Claim 11, **characterized in that** the holder (24) has a closed frame with a holder lower part (26) and with a holder upper part (30) or with two clamping jaws for receiving the frame or parts thereof.

13. Method for the material-removing machining of a blank (10) in a holding device (42) according to one of Claims 1 to 12, **characterized in that** a predetermined workpiece (18) is continuously exposed from the ceramic blank (10), without the direction of advance being stipulated, until only holding webs (20) freely selectable in terms of number and location are formed, which end directly on the residual material of the blank in the region of the frame (12) or on the frame (12).

14. Use of a holding device (42) according to one of Claims 1 to 12 for the production of fully ceramic dentures, in particular tooth crowns or tooth bridges.

## Revendications

1. Dispositif de retenue (42) comprenant une ébauche en céramique poreuse (10) ayant une forme cylindrique ou prismatique, et des moyens pour serrer le dispositif de retenue dans une machine-outil pour l'usinage par enlèvement de matière de l'ébauche (10) pour la fabrication d'une pièce en céramique (18),
**caractérisé en ce**
**qu'**un cadre étroit (12) est fixé par un assemblage par adhésion, sur au moins une partie de la périphérie de l'ébauche (10) retenue sans contrainte, dans la région d'un plan comprenant son axe médian longitudinal (A), ce cadre (12) recouvrant la surface de l'ébauche (10) seulement sur une petite partie, et étant maintenu pour sa part de manière détachable et sans se décentrer dans un support stable (24) avec un adaptateur de serrage (34), et cette combinaison pouvant être fixée dans la machine-outil de manière non rotative et sans se décentrer.

2. Dispositif de retenue (42) selon la revendication 1, **caractérisé en ce que** l'ébauche (10) est réalisée perpendiculairement à l'axe médian longitudinal (A), sous forme ronde ou polygonale, avec deux faces latérales parallèles, en particulier carrées, rectangulaires, hexagonales ou octogonales.

3. Dispositif de retenue (42) selon la revendication 1 ou 2, **caractérisé en ce que** l'ébauche en céramique verte ou frittée (10) se compose d'un ou de plusieurs oxydes métalliques, de préférence de Al₂O₃, TiO₂, MgO, Y₂O₃ et/ou de cristal mixte d'oxyde de zirconium.

4. Dispositif de retenue (42) selon l'une quelconque des revendications 1 à 3, **caractérisé en ce que** le cadre (12) recouvre la surface de l'ébauche à usiner (10) au maximum à raison de 25%, de préférence au maximum à raison de 15%, et/ou présente une épaisseur (d) de préférence de 1 à 8 mm, en particulier de 3 à 6 mm.

5. Dispositif de retenue (42) selon l'une quelconque des revendications 1 à 4, **caractérisé en ce que** le cadre (12) présente une largeur (b) de 3 à 10 mm, sur un côté long ou étroit, pouvant aussi aller jusqu'à 20 mm, mais est par ailleurs réalisé avec une forme régulière.

6. Dispositif de retenue (42) selon l'une quelconque des revendications 1 à 5, **caractérisé en ce que** le cadre (12) est fermé ou en forme de U, avec des branches s'étendant essentiellement sur toute la longueur de l'ébauche (10).

7. Dispositif de retenue (42) selon l'une quelconque des revendications 1 à 5, **caractérisé en ce que** le cadre (12) se compose de pièces partielles connectées les unes aux autres, juxtaposées ou collées de préférence à faible distance les unes des autres à l'ébauche (10).

8. Dispositif de retenue (42) selon l'une quelconque des revendications 1 à 7, **caractérisé en ce que** la mince fente (14) entre le cadre (12) ou ses pièces détachées et l'ébauche (10) est remplie avec un promoteur d'adhésion (16), de préférence une colle.

9. Dispositif de retenue (42) selon l'une quelconque des revendications 1 à 8, **caractérisé en ce que** des surfaces appropriées pour être reçues dans le support (24) sont réalisées sur la partie exposée du cadre (12), en particulier des formes coniques, pyramidales, hémisphériques, en forme de queue d'aronde ou de toit.

10. Dispositif de retenue (42) selon l'une quelconque des revendications 1 à 9, **caractérisé en ce que** l'on applique sur la partie exposée du cadre (12) et/ou sur l'ébauche poreuse (10) des informations lisibles optiquement ou en machine, en particulier le facteur de retrait et/ou la densité verte.

11. Dispositif de retenue (42) selon l'une quelconque des revendications 1 à 10, **caractérisé en ce que** le cadre (12) est maintenu dans un support (24) mécaniquement stable, par une force de serrage non-agissant sur l'ébauche (10), et le support (24) présente un adaptateur de serrage (34) pour la machine-outil, en particulier un mandrin avec une protection anti-rotation (36) à insérer ou un plateau à brider.

12. Dispositif de retenue (42) selon la revendication 11, **caractérisé en ce que** le support (24) présente un cadre fermé avec une partie inférieure de support (26) et une partie supérieure de support (30), ou deux mâchoires de serrage pour recevoir le cadre ou ses parties.

13. Procédé pour l'usinage par enlèvement de matière d'une ébauche (10) dans un dispositif de retenue (42) selon l'une quelconque des revendications 1 à 12,
**caractérisé en ce que**
l'on expose une pièce prédéfinie (18) en continu sans prédéfinir le sens d'avance, à partir d'une ébauche en céramique (10), jusqu'à ce que des nervures de retenue (20) soient réalisées en nombre quelconque et en des emplacements quelconques, lesquelles se terminent directement sur le matériau résiduel de l'ébauche dans la région du cadre (12) ou sur le cadre (12).

14. Utilisation d'un dispositif de retenue (42) selon l'une quelconque des revendications 1 à 12 pour la fabrication de prothèses dentaires tout en céramique, en particulier des couronnes ou des bridges.
